# EUROPÄISCHE PATENTANMELDUNG

(11) **EP 2 218 975 A1**
(43) Veröffentlichungstag der Anmeldung: **18.08.2010**
(21) Anmeldenummer: 09001881.3
(22) Anmeldetag: 11.02.2009
(51) Int. Cl.: F24D 19/10, F24H 9/12, F28D 20/00

(54) **Schichtwärmespeicher und Ladeeinrichtung dazu**

(71) Anmelder: Isenmann, Hermann, 77790 Steinach/Baden (DE)
(72) Erfinder: Isenmann, Hermann, 77790 Steinach/Baden (DE)

(57) **Zusammenfassung**

Die Erfindung betrifft einen Schichtwärmespeicher zum Erwärmen und Speichern einer Flüssigkeit in Schichten mit steigenden Temperaturen übereinander, insbesondere einen Warmwasserschlchtspeicher für Heizungsanlagen zur Beheizung von Räumen und zur Erzeugung von warmem Brauchwasser für Körperpflege und Ernährung, welche Heizungsanlagen mit Sonnenkollektoren oder anderen Wärmeaustauschern und/oder Wärmepumpen an Wärmequellen schwankender Leistung wie z.B. Sonnenkollektoren oder Wärmepumpen betrieben werden können. Betriebsbedingten Umständen entsprechend müssen die Abmessungen der Gebäude und deren Räume, in denen bekannte Speicher der genannten Art aufgestellt und betrieben werden sollen, insbesondere die lichte Höhe der Räume erheblich grösser als die Abmessungen der Speicherbehälter sein. In den eher niedrigen Kellerräumen der üblichen Wohnhäuser, in denen Heizungsanlagen einzurichten sind, können Schichtwärmespeicher der bekannten Art nur mit geringer Bauhöhe und entsprechend geringer Speicherkapazität oder überhaupt nicht eingesetzt werden. Die erfindungsgemäss ausgestalteten Schichtwärmespeicher erfordern keine besonders überhöhten Betriebsräume und weisen besonders ausgestaltete Leiteinrichtungen zum Ableiten und Einleiten von Flüssigkeit aus bzw. in übereinander liegende Schichten von Flüssigkeit mit unterschiedlicher Temperatur im Speicherraum auf. Die erfindungsgemässen Ladeeinrichtungen erfordern keine besonders überhöhten Betriebsräume. Sie können zuverlässig betrieben und einfach überwacht werden.

## Beschreibung

Die Erfindung betrifft einen Schichtwärmespeicher zum Erwärmen und Speichern einer Flüssigkeit in Schichten mit steigenden Temperaturen übereinander, insbesondere Warmwasserschichtspeicher für Helzungsanlagen zur Beheizung von Räumen und zur Erzeugung von warmem Brauchwasser für Körperpflege und Ernährung, welche Heizungsanlagen mit Sonnenkollektoren oder anderen Wärmeaustauschern und/oder Wärmepumpen an Wärmequellen schwankender Leistung betrieben werden können,
- mit einem im Einsatz aufrecht stehenden Speicherbehälter zum Speichern der Flüssigkeit, insbesondere Warmwasser, in Schichten mit nach oben ansteigender Temperatur in einem hauptsächlich vertikal ausgerichteten Speicherraum des Speicherbehälters,
- mit einer Entnahmeeinrichtung zum Entnehmen von Flüssigkeit aus Schichten mit bestimmter Temperatur in bestimmter Höhe des Speicherraums und zum Zuführen der entnommenen Flüssigkeit zu einer Wärmequelle und
- mit einer Beladeeinrichtung zum Einschichten von an der Wärmequelle erwärmter Flüssigkeit ihrer Temperatur entsprechend in Höhe zwischen Flüssigkeitsschichten mit tieferer und höherer Temperatur im Speicherraum des Speicherbehälters.

Schichtwärmespeicher der genannten Art, beispielsweise Warmwasserschichtspeicher in Heizungsanlagen zur Beheizung von Räumen und zur Erzeugung von warmem Brauchwasser für Körperpflege und Ernährung sind dazu bestimmt, in Sonnenkollektoren oder anderen Wärmeaustauschern oder in Wärmepumpen an Wärmequellen begrenzter und schwankender Leistung wie Sonneneinstrahlung, Erdwärme, Umgebungswärme oder Verbrennungswärme als Abfall anderer technischer Vorgänge mit oder ohne zusätzliches Heizgerät erwärmtes Wasser aufzunehmen und seiner Temperatur entsprechend in Schichten nach oben ansteigender Temperatur zu lagern. Die Leistung der zur Verfügung stehenden Wärmequellen der genannten Art ist in der Regel nicht beliebig steuerbar sondern natürlich schwankend. Der erzielbare Temperaturanstieg des erwärmten Wassers lässt sich durch Steuerung der zugeführten Wassermenge und/oder der zugeführten Arbeit bezogen auf Zeit je nach verfügbarer Sonneneinstrahlung oder verfügbarer Leistung anderer Wärmequellen bestimmen.

Das der Wärmequelle zugeführte Wasser wird in der Regel durch die Entnahmeeinrichtung dem Schichtwärmespeicher von unteren Schichten mit entsprechend geringer Temperatur entnommen und nach Erwärmung von der Wärmequelle durch die Beladeeinrichtung in obere Schichten des im Speicher gelagerten Wassers mit erhöhter Temperatur zurückgeleitet. Die erhöhte Temperatur ergibt sich aus der Temperatur des der Wärmequelle zugeführten Wassers und aus dem an der Wärmequelle erzeugten Temperaturanstieg. Die oberste Schicht des im Speicher gelagerten Wassers weist dann die höchste tatsächlich erzielte Endtemperatur auf. Bei der Beladung eines Schichtwärmespeichers Ober eine variable oder eine konstante Wärmequelle und dem Ziel, eine konstante obere Speichertemperatur zu erreichen, muss die Zulauftemperatur und Menge der dem Speicher entnommenen und der Wärmequelle zugeführten Flüsssigkeit so gesteuert werden, dass mittels der vorhandenen Wärmequelle der Volumenstrom der in den Speicher zurückgeleiteten Flüssigkeit die gewünschte Endtemperatur erreicht. Die der Wärmequelle zugeführte Flüssigkeit entnimmt man den Flüssigkeitsschlchten im Speicher mit der erforderlichen Zulauftemperatur. Die Entnahmeeinrichtung am Speicher muss dementsprechend steuerbar sein derart, dass sie sich ausschliesslich für den Abfluss von Flüssigkeit aus den Schichten mit der erforderlichen Zulauftemperatur öffnet.

Schichtwärmespeicher der genannten Art werden als Pufferspeicher für die Warmwasserbereitung in Haushalten eingesetzt und sollen dabei in ihrer obersten Schicht Wasser mit einer Temperatur im Bereich zwischen 60 und 70 Grad Celsius vorhalten, um nach Ableitung und Zumischung von Frischwasser in einer Frischwasserstation eine ausreichende Menge und ein ausreichendes Temperaturniveau des schliesslich nutzbaren Brauchwassers sicher zu stellen. Zu diesem Zweck muss das an einer variablen oder konstanten Wärmequelle erwärmete Wasser eine Endtemperatur im Bereich von 60 bis 70 Grad Celsius aufweisen und so in die oberste Schicht des Speichers einleitbar sein. Die genannte Endtemperatur zu erzielen erfordert allerdings die geeignete Steuerung von Menge des der Wärmequelle zugeführten Wassers und Ort seiner Entnahme aus tiefer liegenden Schichten des Speichers.

Schichtwärmespeicher der genannten Art sind bekannt und beispielsweise Gegenstand von DE 102004062413 B3 und DE 19953492 A1 desselben Anmelders. Aus solchen Speichern soll darin schichtweise gelagerte Flüssigkeit einer Schicht mit bestimmter Temperatur abgeleitet, einer Wärmequelle wechselnd begrenzter Leistung zugeleitet und von dort erwärmt in eine höher im selben Speicher gelegene Schicht mit entsprechend erhöhter Temperatur zurückgeführt werden. Das technische Problem der Entnahme von Flüssigkeit bestimmter Temperatur in bestimmter Höhe aus dem Speicher wurde beispielsweise gemäss DE 19953492 A1 mittels einer Entnahmeeinrichtung gelöst, die hauptsächlich In einem vertikal ausgerichteten Rohr mit einer Reihe übereinander liegender Öffnungen und in einer zum Verteilerrohr verstellbaren Kullsse etwa in Form eines koaxial zum Verteilerrohr angeordneten Kulissenrohrs besteht, das je nach seiner Stellung zum Verteilerrohr eine der Öffnungen in bestimmter Höhe am Verteilerrohr freigibt und alle anderen Öffnungen schliessend abdeckt. Das Kulissenrohr ist gemäss DE 19953492 A1 axial verschiebbar. Bei einer ähnlichen Entnahmeeinrichtung gemäss DE 29912710 U1 ist es axial drehbar und von einem Thermobimetallwendel gesteuert.

Die Entnahmeeinrichtungen der bekannten Schichtwärmespeicher erstrecken sich vertikal ausgerichtet mindestens teilweise in den Speicherräumen der in der Regel hauptsächlich kreiszylindrischen und im Einsatz vertikal hoch aufgerichteten Speicherbehälter und gehen entweder von den Behälterböden an den unteren Enden oder von den Behälterdeckeln an den oberen Enden der Behälter aus.. Sie weisen in den Speicherräumen vertikal gemessen eine Länge in der Regel nicht wesentlich kürzer als die Höhe der Speicherräume auf. Entnahmeeinrichtungen der Art gemäss DE 19953492 A1 erfordern zusätzlich für die axiale Verschiebung des Kulissenrohrs vertikal ausgedehnten Raum und weisen entsprechend erhöhte Baulänge auf. Die Entnahmeeinrichtungen der bekannten Speicher sind der betriebsbedingten Verschmutzung ausgesetzt und müssen zur regelmässigen Reinigung nach oben oder nach unten ausgebaut und wieder eingesetzt werden. Diesen betriebsbedingten Umständen entsprechend müssen die Abmessungen der Gebäude und deren Räume, in denen die Speicher aufgestellt und betrieben werden sollen, insbesondere die lichte Höhe der Räume erheblich grösser als die Abmessungen der Speicherbehälter sein. In den eher niedrigen Kellerräumen der üblichen Wohnhäuser, in denen Heizungsanlagen einzurichten sind, können Schichtwärmespeicher der bekannten Art nur mit geringer Bauhöhe und entsprechend geringer Speicherkapazität oder überhaupt nicht eingesetzt werden.

Der Erfindung liegt die Aufgabe zugrunde, die genannten Probleme im Stand der Technik zu überwinden und einen Schichtwärmespeicher mit möglichst grosser Speicherkapazität zu schaffen, der in Gebäude und Räume mit Raumhöhen nicht wesentlich grösser als die Bauhöhe des Speichers eingesetzt werden kann. Die erfinderische Lösung der genannten Aufgabe ist im vorliegenden Patentanspruch 1 angegeben. Sie besteht bei einem Schichtwärmespeicher der anfangs genannten Art zunächst im wesentlichen darin,
- dass die Entnahmeeinrichtung ein Grundlager aufweist, das in mittlerer Höhe an der Wand des Speicherbehälters anzuschlagen ist und einen die Wand durchquerenden Abflusskanal für den Abfluss von Flüssigkeit aus dem Speicherraum bildet,
- dass die Entnahmeeinrichtung ein Schwenkrohr aufweist, das an seinem einen Ende mit dem Grundlager innerhalb des Speicherraums vertikal schwenkbar verbunden ist und dessen Rohrleitung am einen Ende mit dem Abflusskanal im Grundlager strömungstechnisch verbunden ist und
- dass das Grundlager Mittel zum schwenkbaren Bewegen und Festhalten des Schwenkrohrs In wählbaren Stellungen mit dessen freiem Ende in wählbarer Höhe innerhalb des Speicherraums aufweist.

Die abhängigen Patentansprüche 2 bis 8 betreffen Merkmale besonders vorteilhafter Ausführungsarten der Erfindung. Dazu gehören unter anderem ein die Wand des Speicherbehälters durchquerendes Getriebe als Mittel zum schwenkbaren Bewegen und Festhalten des Schwenkrohrs, ausserdem ein Stellmotor am Getriebe ausserhalb des Speicherbehälters als Mittel zum schwenkbaren Bewegen und Festhalten des Schwenkrohrs innerhalb des Speicherraums. Die Beladeeinrichtung (4) erstreckt sich vorzugsweise in fester Stellung vertikal im Speicherraum (2) und weist in Reihe angeordnete Austrittsöffnungen zum Einschichten erwärmter Flüssigkeit durch thermische Konvektion in unterschiedlicher Höhe des Speicherraums auf.

Vorteilhaft verbindet eine Umlaufleitung den Abflusskanal der Entnahmeeinrichtung mit der Beladeeinrichtung im Speicherraum. Die Umlaufleitung besteht in einer Entnahmeleitung, in einer Beladeleitung und einem Wärmeaustauscher einer Heizung mit Anschluss an die Wärmequelle. Die Entnahmeleitung hat Anschluss einerseits am Abflusskanal der Entnahmeeinrichtung und andererseits am Wärmeaustauscher der Heizung. Die Beladeleitung ist einerseits am Wärmeaustauscher und andererseits an der Beladeeinrichtung im Speicherraum angeschlossen. In der Umlaufleitung, vorzugsweise in der Entnahmeleitung befindet sich eine Umwälzpumpe, deren Fördermenge regelbar sein sollte. Temperaturfühler in unterschiedlichen Höhen des Speicherraums dienen zur Bestimmung und Einstellung der Höhe des freien Endes des Schwenkrohrs der Entnahmeeinrichtung im Speicherraum. Temperaturfühler in der Umlaufleitung zwischen Abflusskanal der Entnahmeeinrichtung und Beladeeinrichtung, vorzugsweise in der Beladeleitung dienen zum Messen der Temperatur der an der Wärmequelle erwärmten Flüssigkeit, die der Beladeeinrichtung im Speicherraum zugeführt wird, und zur Bestimmung der Fördermenge der Umwälzpumpe. Eine Regel- und Steuereinrichtung einschliesslich Regler, Messleitungen zu den Temperaturfühlern und Steuerleitungen zum Stellmotor und zur Umwälzpumpe soll selbsttätig den Betriebszustand der Erwärmung von Flüssigkeit in der Heizung mit Anschluss an eine Wärmequelle schwankender Leistung steuern hauptsächlich derart, dass Flüssigkeit bestimmter Temperatur der Beladeeinrichtung im Speicherraum zugeführt wird.

Für den Einsatz als Pufferspeicher mit Schichteinrlchtung für die Warmwasserbereitung in Haushalten sind eine Ableiteinrichtung zum Ableiten warmer Flüssigkeit aus dem Speicherraum des Speicherbehälters für den Gebrauch, und eine Zuleiteinrichtung zum Einschichten von Flüssigkeit aus einer Flüssigkeitsquelle ihrer Temperatur entsprechend in Höhe zwischen Flüssigkeitsschichten mit tieferer und höherer Temperatur im Speicherraum des Speicherbehälters, vorzugsweise eine Zuleiteinrichtung vorgesehen, die sich in fester Stellung vertikal im Speicherraum erstreckt und zum Einschichten der Flüssigkeit durch thermische Konvektion in unterschiedlicher Höhe Austrittsöffnungen für die zugeführte Flüssigkeit aufweist.

Die Erfindung betrifft auch eine Leiteinrichtung mit den vorher genannten erfinderischen Merkmalen der Entnahmeeinrichtung, einzusetzen zum Ableiten von Flüssigkeit aus übereinander liegenden Schichten oder zum Zuleiten von Flüssigkeit in übereinander liegende Schichten von Flüssigkeit mit unterschiedlicher Temperatur im Speicherraum eines Schichtwärmespeichers, welche Leiteinrichtung steurbar ist derart, dass sie sich ausschliesslich in einer der Schichten mit der erforderlichen Temperatur für den Abfluss oder den Zufluss von Flüssigkeit öffnet..Diese Leiteinrichtung enthält alle wesentlichen Merkmale der Erfindung für Einsätze unterschiedlicher Zweckbestimmung und ist Gegenstand des unabhängigen Patentanspruchs 9.

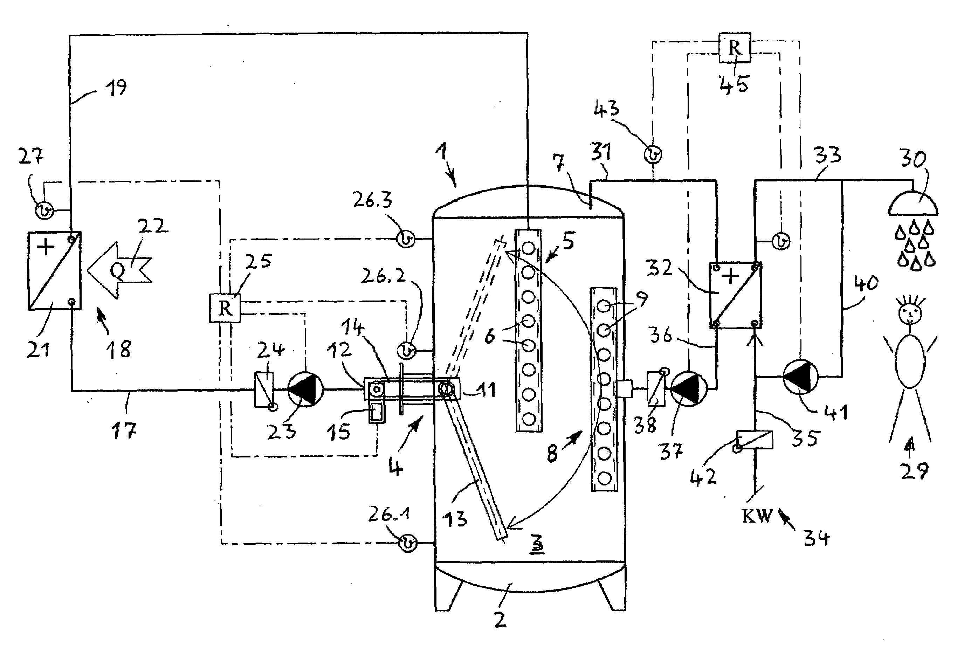

Die Erfindung wird im Folgenden mittels der beigefügten Zeichnung an einem schematisch dargestellten Ausführungsbeispiel der Art einer Anlage zum Herstellen und Vorhalten von Warmwasser für den Gebrauch in Haushalten weiter erläutert.

Der in der Zeichnung dargestellte Warmwasserschichtspeicher 1 besteht in einem zylindrischen, aufrecht stehenden Speicherbehälter 2, der einen vertikal ausgerichteten Speicherraum 3 umschliesst und zum Speichern von Wasser in Schichten mit nach oben ansteigender Temperatur unterschiedlicher Temperatur vorgesehen ist. Zum Speicher gehört hauptsächlich auch eine steuerbare Entnahmeeinrichtung 4 zum Entnehmen von Wasser aus Schichten mit bestimmter Temperatur in bestimmter Höhe des Speicherraums. Ausserdem gehört zum Speicher eine Beladeeinrichtung 5 zum Rückführen und Einschichten des mittels der Entnahmeeinrichtung entnommenen und inzwischen erwärmten Wassers seiner Temperatur entsprechend in Höhe zwischen Wasserschichten mit tieferer und höherer Temperatur im Speicherraum. Die Beladeeinrichtung des bildlich dargestellten Ausführungsbeispiels besteht in einem vertikal ausgerichteten Rohr mit einer Reihe übereinander angeordneter Austrittsöffnungen 6, durch die das dem Rohr zurückgeführte Wasser in Wasserschichten unterschiedlicher Höhe des Speicherraums fliesen kann. Im Rohr begrenzt thermische Konvektion bestimmt den Zufluss des Wassers in eine Schicht mit etwa gleicher Temperatur.

Der Warmwasserschichtspeicher 1 des bildlich dargestellten Ausführungsbeispiels weist schliesslich noch eine Ableiteinrichtung 7 in Form eines einfachen Rohrendes bei der obersten und wärmsten Wasserschicht im Speicherraum 3 zum Ableiten warmen Wassers für den Gebrauch und eine vertikal ausgerichtete Zuleiteinrichtung 8 zum Zuleiten und Einschichten von Kaltwasser seiner Temperatur entsprechend in Höhe zwischen Schichten mit tieferer und höherer Temperatur im Speicherraum auf. Die Zuleiteinrichtung besteht in einem vertikal ausgerichteten Rohr mit einer Reihe übereinander angeordneter Austrittsöffnungen 9 und Ist der Beladeeinrichtung 5 nach Form und Funktion ähnlich.

Die Entnahmeeinrichtung 4 besteht erflndungsgemäss hauptsächlich in einem Grundlager, 11, das einen die Wand des Speicherbehälters 2 durchquerenden Abflusskanal 12 bildet, ausserdem in einem Schwenkrohr 13, das an seinem einen Ende innerhalb des Speicherraums 3 mit dem Grundlager vertikal schwenkbar verbunden ist und dessen Rohrleitung an dem einen Ende mit dem Abflusskanal im Grundlager strömungstechnisch verbunden ist, und in einem Getriebe 14, das innerhalb des Grundlagers die Wand des Speicherbehälters durchquert und am einen Ende des Schwenkrohrs zum schwenkbaren Bewegen und Festhalten des Schwenkrohrs In wählbaren Stellungen mit dessen freiem Ende in wählbarer Höhe innerhalb des Speicherraums. Ein Stellmotor 15 ausserhalb des Speicherraums ist durch das Getriebe mit dem einen Ende des Schwenkrohrs innerhalb des Speicherraums verbunden und dient zum Einstellen und Halten des Schwenkrohrs derart, dass dessen freies Ende sich in bestimmter Höhe des Speicherraums befindet und von dort Wasser bestimmter Temperatur aufnimmt.

Eine mit dem Abflusskanal 12 verbundene Entnahmeleitung 17 leitet das dem Speicherraum 3 entnommene Umlaufwasser zu einer Heizung 18, in der das Wasser erwärmt wird. Eine Beladeleitung 19 führt das erwärmete Umlaufwasser von der Heizung zur Beladeeinrichtung 5 im Speicherraum 3 zurück. Die Heizung besteht bei dem dargestellten Ausführungsbeispiel in einem Wärmeaustauscher 21, der von einer Wärmequelle 22 Wärme aufnimmt und an das zugeleitete Umlaufwasser abgibt. Der Wärmeaustauscher kann ein Sonnenkollektor unter Sonneneinstrahlung als Wärmequelle oder Bestandteil einer Wärmepumpe mit Anschluss an Wärmequellen unterschiedlicher Art mit technisch verwertbarer Leistung oder Bestandteil eines Heizgeräts sein, dessen Wärmequelle in chemischen oder elektrischen Vorgängen besteht.

In der Entnahmeleitung 17 befinden sich eine regelbare Umwälzpumpe 23 zum Ansaugen bestimmter Mengen des am Abflusskanal verfügbaren Wassers und zum Fördern des Wassers durch die Heizung 18 und die Beladeleltung 19 zurück zur Beladeeinrichtung 5 im Speicherraum 3. Eine Rückschlagklappe 24 verhindert in der Entnahmeleitung unerwünschten Rückfluss von Wasser im Fall von Betriebsstörungen oder im Ruhezustand. Ein Regler 25 ist regeltechnisch über Messleitungen mit Temperaturfühlern 26.1 und 26.2 und 26.3 in verschiedenen Höhen am Speicherbehälter 2 und ausserdem mit einem Temperaturfühler 27 in der Beladeleitung 19 verbunden und steuert Ober Steuerleitungen die Umwälzpumpe 23 und den Stellmotor 15 derart, dass sich ein Betriebszustand mit möglichst hohem Wirkungsgrad bezüglich der Erwärmung des Wassers in der Heizung auf eine erforderliche Temperatur einstellt.

Im schematisch bildlich dargestellten Ausführungsbeispiel dient der erfindungsgemässe Schichtwärmespeicher 1 einem Verbraucher 29 unter einer Dusche 30 zur Speicherung von Warmwasser, das dem Speicherraum 3 durch die Ableiteinrichtung 7 entnommen, danach über eine Warmwasserleitung 31 zunächst einem Wärmeaustauscher 32 und von dort über eine Verbraucherleitung 33 der Dusche 30 zugeführt wird. Der Wärmeaustauscher kann Bestandteil einer Zusatzheizung sein, in der das Warmwasser aus dem Speicherraurn weiter erwärmt wird, wenn erhöhte Tempertur für den Gebrauch an der Dusche erforderlich ist. Ein bildlich nicht dargestelltes Absperrventil zwischen Dusche und Brauchwasserleitung dient zum Absperren der Dusche im Ruhezustand vom Zufluss des Brauchwassers.

Das aus dem Speicherraum 3 abgeleitete Warmwasser wird durch eine gleiche Menge von Frischwasser aus einer Wasserquelle 34 vorzugsweise einem Wasseranschluss am öffentlichen Leitungsnetz ersetzt. Das Frischwasser fliesst zunächst durch eine Frischwaserleitung 35 von der Quelle bzw. dem Anschluss am Leitungsnetz zum Wärmeaustauscher 32 und von dort durch eine Kaltwasserleitung 36 zur Zuleiteinrichtung 8 im Speicherraum 3. In der Kaltwasserleitung befindet sich eine Förderpumpe 37, die den Wasserstrom durch Speicherraum, Warmwasserleitung und Wärmeaustauscher zur Brauchwasserleitung 33 aufrecht erhält, wenn der Wasserdruck im Frischwasser an der Wasserquelle nicht ausreicht. Eine Rückschlagklappe 38 verhindert den Rückfluss von Wasser aus dem Speicherraum, wenn bei Betriebsstörung oder in einem Ruhezustand der Anlage der Druck in der Kaltwasserleitung an der Zuleitelnrichtung nachlässt. Das einerseits aus dem Speicherraum abgeleitete Warmwasser tauscht mit dem andererseits in den Speicherraum eingeleiteten Frischwasser im Wärmeaustauscher 32 Wärme aus derart, dass sich das in der Regel sehr kalte Frischwasser erwärmt und das Warmwasser abkühlt, soweit es nicht durch Zusatzheizung erwärmt wird. Wenn das abgeleitete Warmwasser eine höhere Temperatur als die an der Dusche geforderte Temperatur des Brauchwassers aufweist, kann mit der Abkühlung des Warmwassers im Wärmeaustauscher die an der Dusche geforderte Temperatur erztelt werden.

Eine Rückflussleitung 40 mit Rückflusspumpe 41 verbindet die Brauchwasserleitung 33 mit der Frischwasserleitung 35. Eine Rückschlagklappe 42 in der Frischwasserleitung verhindert den Rückfluss von Wasser aus dem Wärmeaustauscher 32 und aus der Umwälzleitung zur Frischwasserquelie 34 bzw. zum Anschluss am öffentlichen Leitungsnetz. Wenn sich die Dusche im Ruhezustand befindet und durch das nicht bildlich dargestellte Absperrventil gegenüber der Brauchwasserleitung abgesperrt ist, kann die Rückflusspumpe in Gang gesetzt werden. Die Rückflusspumpe zieht Warmwasser durch die Ableiteinrichtung 7aus dem Speicherraum 3 ab. Sie bewirkt den Durchfluss des Wassers durch Warmwasserleitung31, Wärmeaustauscher 32, Brauchwasserleitung 33 und Rückflussleitung 40. Das so abgezogene Wasser wird mittels der Rückflusspumpe schliesslich durch Frischwasserleitung 35, Wärmeaustauscher 32, Kaltwasserleitung 36 und Zuleiteinrichtung 8 in den Speicherraum 3 zurückbefördert. Mit Zusatzheizung im Wärmeaustauscher und mit dem Betrieb der Rückflusspumpe kann die Temperatur des Wassers im Speicherraum erhöht werden, während der Betrieb der Dusche ruht. Die thermodynamischen und hydrodynamischen Vorgänge sind dabei denjenigen ähnlich, die für die Erwärmung des Wassers an der Wärmequelle 22 stattfinden. Temperaturfühler 43 und 44 in de Warmwasserieitung 31 beziehungsweise in der Brauchwasserleitung 33 geben die Temperaturen des Warmwassers und des Brauchwassers und so die Wirkung des Wärmeaustauschers 32 an. Ein Regler 45 mit Messleitungen zu den Temperaturfühlern und mit Steuerleitungen zur Förderpumpe 37 und zur Rückflusspumpe 41 dient dazu, unter allen äusseren Umständen und den Erfordernissen des Verbrauchers 29 entsprechend die wirtschaftlichen Betriebszustände mit bestem Wirkungsgrad herzustellen.

Die Zeichnung lässt mit dem gestrichelt dargestellten Schwenkarm in Stellung mit Richtung nach oben ansteigend (Stellung in Zeiger- Richtung etwa 1Uhr) einen besonders vorteilhaften Betriebszustand erkennen, in dem Umlaufwasser einer hochgelegenen Schicht am oberen Ende des Speicherraums 3 entnommen, der Heizung 18 zugeführt und in dieser weiter erwärmt und danach über die Beladeeinrichtung 19 in eine noch höher gelegene Schicht am oberen Ende des Speicherraums zurückgeführt wird. In diesem Betriebszustand kann durch Wärmezufuhr von einer der üblichen Wärmequellen 22 am Temperaturfühler 27 und am oberen Ende des Speicherraums ohne weiteres eine Betriebstemperatur erzielt werden, die Wasser haben muss, um für Heizung und Gebrauch ausreichend keimfrei zu werden und zu bleiben. Solche Keimfreiheit besteht in Wasser mit einer Temperatur über 60 Grad Celsius. Am oberen Ende des Speicherraums bei der Ableiteinrichtung 7 sollte die Betriebstemperatur allerdings zur hygienischen Sicherheit mindestens 65 Grad Celsius betragen. Mit dem erfindungsgemässen Einsatz der Entnahmeeinrichtung 4 , deren Schwenkrohr 13 sich etwa in der gestrichelt gezeichneten Stellung befindet, gelingt es, das durch Schwenkrohr und Abflusskanal 12 entnommene Umlaufwasser bereits bei einem einzigen Durchfluss in der Heizung 18 auf die für Brauchwasser notwendige Temperatur von über 65 Grad Celsius zu erhitzen.

Eine Leiteinrichtung der Art der Entnahmeeinrichtung 4 kann allgemein für gleiche Zwecke der Entnahme und Ableitung von Flüssigkeit aus einem Speicherbehälter oder auch für andere Zwecke der Beladung, Zufuhr und Einschichtung von Flüssigkeit in den Speicherraum eines Speicherbehälters eingesetzt werden. Beispielsweise kann es unter Umständen zweckmässig sein, anstelle der Ableiteinrichtung 7 eine Leiteinrichtung der Art der Entnahmeeinrichtung einzusetzen und einen dazu gehörenden Stellmotor der Art des Stellmotors 15 mit dem Regler 45 zu steuern.

### Stückliste

- 1: Warmwasserschichtspeicher
- 2: aufrecht stehender Speicherbehälter
- 3: vertikal ausgerichteter Speicherraum
- 4: steuerbare Entnahmeeinrichtung
- 5: vertikal ausgerichtete Beladeeinrlchtung
- 6: Reihe übereinander angeordneter Austrittsöffnungen
- 7: Ableiteinrichtung in Form eines Rohrendes für Warmwasser
- 8: vertikal ausgerichtete Zuleiteinrichtung für Kaltwasser
- 9: Rohr mit übereinander angeordneten Austrittsöffnungen
- 10: -----
- 11: Grundlager
- 12: Abflusskanal
- 13: Schwenkrohr
- 14: Getriebe
- 16: Stellmotor
- 16: -----
- 17: Entnahmeleitung für Umlaufwasser
- 18: Heizung
- 19: Beladeleitung für Umlaufwasser
- 20: -----
- 21: Wärmeaustauscher
- 22: Wärmequelle
- 23: Umwälzpumpe
- 24: Rücksclhlagventil
- 25: Regler mit Steuerleitung zu Stellmotor und Umwälzpumpe
- 26: Temperaturfühler am Speicherbehälter
- 27: Temperaturfühler an Beladeleitung
- 28: -----
- 29: Verbraucher
- 30: Dusche
- 31: Warmwasserleitung
- 32: Wärmeaustauscher
- 33: Brauchwasserleitung
- 34: Wasserquelle bzw. Waseranschluss am Netz
- 35: Frischwasserleitung
- 36: Kaltwasserleitung
- 37: Förderpumpe
- 38: Rückschlagklappe
- 39: -----
- 40: Rückflussleitung
- 41: Rückflusspumpe
- 42: Rückschlagklappe
- 43: Temperaturfühler an Warmwasserleitung
- 44: Temperaturfühler an Brauchwaserleitung
- 45: Regler mit Steuerleitung zu Förder- und Rückflusspumpe

## Patentansprüche

1. Schichtwärmespeicher zum Erwärmen und Speichern einer Flüssigkeit in Schichten mit steigenden Temperaturen übereinander, insbesondere Warmwasserschichtspeicher für Heizungsanlagen zur Beheizung von Räumen und zur Erzeugung von warmem Brauchwasser für Körperpflege und Ernährung, welche Heizungsanlagen mit Sonnenkollektoren oder anderen Wärmeaustauschern und/oder Wärmepumpen an Wärmequellen schwankender Leistung betrieben werden können,
- mit einem im Einsatz aufrecht stehenden Speicherbehälter (2) zum Speichern der Flüssigkeit, insbesondere Warmwasser, in Schichten mit nach oben ansteigender Temperatur in einem hauptsächlich vertikal ausgerichteten Speicherraum (3) des Speicherbehälters,
- mit einer Entnahmeeinrichtung (4) zum Entnehmen von Flüssigkeit aus Schichten mit bestimmter Temperatur in bestimmter Höhe des Speicherraums (3) und zum Zuführen der entnommenen Flüssigkeit zu einer Wärmequelle (22) und
- mit einer Beladeeinrichtung (5) zum Einschichten von an der Wärmequelle (22) erwärmter Flüssigkeit ihrer Temperatur entsprechend in Höhe zwischen Flüssigkeitsschichten mit tieferer und höherer Temperatur im Speicherraum (3) des Speicherbehälters (2),
**dadurch gekennzeichnet,**
- **dass** die Entnahmeeinrichtung (4) ein Grundlager (11) aufweist, das in mittlerer Höhe an der Wand des Speicherbehälters (2) anzuschlagen ist und einen die Wand durchquerenden Abflusskanal (12) für den Abfluss von Flüssigkeit aus dem Speicherraum (3) bildet,
- **dass** die Entnahmeeinrichtung (4) ein Schwenkrohr (13) aufweist, das an seinem einen Ende mit dem Grundlager (11) innerhalb des Speicherraums (3) vertikal schwenkbar verbunden ist und dessen Rohrleitung am einen Ende mit dem Abflusskanal (12) im Grundlager strömungstechnisch verbunden ist und
- **dass** das Grundlager (11) Mittel (14) zum schwenkbaren Bewegen und Festhalten des Schwenkrohrs (13) in wählbaren Stellungen mit dessen freiem Ende in wählbarer Höhe innerhalb des Speicherraums (3) aufweist.

2. Schichtwärmespeicher nach Patentanspruch 1, **gekennzeichnet**
- **durch** ein die Wand des Speicherbehälters (2) durchquerendes Getriebe (14) als Mittel zum schwenkbaren Bewegen und Festhalten des Schwenkrohrs (13).

3. Schichtwärmespeicher nach Patentanspruch 2, **gekennzeichnet**
- **durch** einen Stellmotor (15) am Getriebe (14) ausserhalb des Speicherbehälters (2) als Mittel zum schwenkbaren Bewegen und Festhalten des Schwenkrohrs (13) innerhalb des Speicherraums (3)..

4. Schichtwärmespeicher nach einem der Patentansprüche 1 bis 3, **dadurch gekennzeichnet**
- **dass** die Beladeeinrlchtung (4) sich in fester Stellung vertikal im Speicherraum (2) erstreckt und in Reihe angeordnete Austrittsöffnungen zum Einschichten erwärmter Flüssigkeit durch thermische Konvektion in unterschiedlicher Höhe aufweist.

5. Schichtwärmspeicher nach einem der Patentansprüche 1 bis 4, **gekennzeichnet**
- **durch** eine Umlaufleitung bestehend in einer Entnahmeleitung (17) mit Anschluss einerseits an den Abflusskanal (12) und andererseits an den Wärmeaustauscher (21) einer Heizung (18) in Verbindung mit der Wärmequelle (22) und ausserdem bestehend in einer Beladeleitung (19) mit Anschluss einerseits am Wärmeaustauscher und andererseits an der Beladeeinrichtung (5) im Speicherraum (3) und
- **durch** eine Umwälzpumpe (23), deren Fördermenge regelbar ist, in der Umlaufleitung, vorzugsweise in der Entnahmeleitung (17).

6. Schichtwärmespeicher nach Patentanspruch 5, **gekennzeichnet**
- **durch** Temperaturfühler (26.1 - 26.3) in unterschiedlichen Höhen des Speicherraums (3) zur Bestimmung und Einstellung der Höhe des freien Endes des Schwenkrohrs (13) im Speicherraum;
- **durch** Temperaturfühler (27) in der Umlaufleitung zwischen Abflusskanal (12) und Beladeeinrichtung (5), vorzugsweise In der Beladeleitung (19) zum Messen der Temperatur der an der Wärmequelle (22) erwärmten Flüssigkeit, die der Beladeeinrichtung (5) im Speicherraum (3) zugeführt wird, und zur Bestimmung der Fördermenge der Umwälzpumpe, und
- **durch** eine Regel- und Steuereinrichtung einschliesslich Regler (25), Messleitungen zu den Temperaturfühlern und Steuerleitungen zum Stellmotor (15) und zur Umwälzpumpe (23).

7. Schichtwärmespeicher nach einem der Patentansprüche 1 bis 6, **gekennzeichnet**
- **durch** eine Ableiteinrichtung (7) zum Ableiten warmer Flüssigkeit aus dem Speicherraum (3) des Speicherbehälters (2) für den Gebrauch, und
- **durch** eine Zuleiteinrichtung (8) zum Einschichten von Flüssigkeit aus einer Flüssigkeitsquelle () ihrer Temperatur entsprechend in Höhe zwischen Flüssigkeitsschichten mit tieferer und höherer Temperatur im Speicherraum (3) des Speicherbehälters (2).

8. Schichtwärmespeicher nach Patentanspruch 7, **dadurch gekennzeichnet,**
- **dass** die zuleiteinrichtung (8) sich in fester Stellung vertikal im Speicherraum (3) erstreckt und in Reihe angeordnete Austrittsöffnungen (9) zum Einschichten erwärmter Flüssigkeit durch thermische Konvektion in unterschiedlicher Höhe aufweist

9. Leiteinrichtung zum Ableiten von Flüssigkeit aus übereinander liegenden Schichten oder zum Zuleiten von Flüssigkeit in übereinander liegende Schichten von Flüssigkeit mit unterschiedlicher Temperatur im Speicherraum eines Schichtwärmespeichers, welche Leiteinrichtung steurbar ist derart, dass sie sich ausschliesslich in einer der Schichten mit der erforderlichen Temperatur für den Abfluss oder den Zufluss von Flüssigkeit öffnet, **gekennzeichnet**
- **durch** die im Patentanspruch 1, vorzugsweise durch die in den Patentansprüchen 2 oder 3 angegebenen Merkmale der Entnahmeeinrichtung (4).
